# EUROPÄISCHE PATENTSCHRIFT

(11) **EP 1 450 081 B1**
(45) Veröffentlichungstag und Bekanntmachung des Hinweises auf die Patenterteilung: **18.06.2008**
(21) Anmeldenummer: 03028784.1
(22) Anmeldetag: 13.12.2003
(51) Int. Cl.: F16J 15/32, F02F 11/00

(54) **Dichtsystem für eine Welle**
Sealing system for a shaft
Système d'étanchéité pour un arbre tournant

(30) Priorität: 18.02.2003 DE 10306602
(43) Veröffentlichungstag der Anmeldung: 25.08.2004
(73) Patentinhaber: Federal-Mogul Sealing Systems Bretten GmbH, 75015 Bretten (DE)
(72) Erfinder: Warnecke, Frank, 76133 Karlsruhe (DE); Kapcoe, John, Carleton MI 48117 (US)
(74) Vertreter: Kurig, Thomas

(56) Entgegenhaltungen:
- EP-A- 0 727 575

## Beschreibung

Die Erfindung betrifft ein Dichtsystem für eine Welle, insbesondere für eine Brennkraftmaschine, mit einem Motorgehäusedeckel, welcher eine Durchgangsbohrung zur Aufnahme eines Trägerelements beinhaltet, wobei das Trägerelement mindestens einen dynamisch sowie mindestens einen statisch wirkenden Dichtbereich aufweist und mit einem Zentrierbereich versehen ist, über den eine Zentrierung zur Durchgangsbohrung erzeugbar ist, wobei das Trägerelement mit dem Motorgehäusedeckel über einen Bajonettverschluß in gesicherter Form verbindbar ist wobei der Zentrierbereich in der Ebene des Bajonettverschlußes angeordnet ist, dergestalt, dass der dynamische Dichtbereich in ausgerichteter Weise mit einer Welle und der statische Dichtbereich mit vorgebbarer Anpreßkraft an einem korrespondierenden Abschnitt des Motorgehäusedeckels zur Anlage bringbar ist.

Der EP-B 0 727 575 ist eine Wellenabdichtung zu entnehmen. Die Vorrichtung beinhaltet eine Abdeckplatte für einen Motor und enthält eine kreisförmige hohlflächige Vertiefung in der Platte, in welche der äußere Umfangsbereich der Wellendichtung einpreßbar und zentrierbar ist. Ein äußerer Teilbereich der Dichtung ist gegenüber einem axial zurückgesetzten Schenkel der Vertiefung zentrierbar und durch einen inneren Bajonettverschluß gegenüber der Vertiefung arretierbar. Nachteil dieses Standes der Technik ist, dass die Abdeckplatte mit einer relativ exakten Vertiefung versehen werden muß, damit eine optimale (zentrische) Anlage des dynamisch wirkenden Dichtbereiches auf der korrespondierenden Motorwelle herbeigeführt werden kann. Der Fertigungsaufwand wird als umfangreich und kostenintensiv angesehen.

Der Erfindung liegt die Aufgabe zugrunde, ein alternatives Dichtsystem bereitzustellen, das ohne äußere Zentrierungen, zumindest einen gleich guten Zentriereffekt, wie beim Stand der Technik, mit sich bringt. Der Fertigungsaufwand im Aufnahmebereich des Dichtsystemes soll gegenüber dem Stand der Technik reduziert werden.

Diese Aufgabe wird durch die Merkmale des Patentanspruch 1 gelöst.

Vorteilhafte Weiterbildungen des Erfindungsgegenstandes sind den Unteransprüchen zu entnehmen.

Abweichend zum Stand der Technik ist nun eine Vertiefung zur zentrierenden Aufnahme der äußeren Umfangsfläche der Wellendichtung nicht mehr notwendig, so dass der hierfür erforderliche Arbeitsschritt zur Erzeugung der Vertiefung entbehrlich ist. Das erfindungsgemäße Dichtsystem wird unmittelbar im Bereich des Bajonettverschlusses in zentrierender Form mit korrespondierenden Abschnitten des Motorgehäusedeckels in Wirkverbindung gebracht.

Das Trägerelement ist mit einem im wesentlichen L-förmigen Querschnitt versehen, so dass ein Radial- und ein Axialschenkel gebildet ist. In ähnlicher Weise wie beim Stand der Technik wird die Arretierung zwischen Aufnahmeelement und Dichtsystem durch einen Bajonettverschluß herbeigeführt. Der Bajonettverschluß ist im Bereich des Axialschenkels vorgesehen und erstreckt sich partiell an mehreren Umfangsstellen. In Umfangsrichtung gesehen erstrecken sich benachbart zu den Bajonettverschlüssen die erfindungsgemäßen Ansätze, wobei mindestens drei Ansätze gleichmäßig über den Umfang verteilt angeordnet sind.

Zur Zentrierung des Trägerelementes ist der Durchmesser der Ansätze größer als der Durchmesser der Bajonettverschlüsse ausgebildet. Durch diese Maßnahme kann sichergestellt werden, dass eine leichte Einführung des Dichtsystems in den zugehörigen Aufnahmebereich des Motorgehäusedeckels gegeben ist, und dass mit fortschreitender Verdrehung des Dichtsystems relativ zum Motorgehäusedeckel eine wirksame zentrierende Verbindung zwischen dem Trägerelement dem Motorgehäusedeckel gegeben ist. Gleichzeitig wird durch den Bajonettverschluß eine entsprechende Sicherung zwischen Dichtsystem und Motorgehäusedeckel herbeigeführt. Durch diese Maßnahme wird eine zum Stand der Technik alternative Zentrierung des dynamischen Dichtbereiches auf dem rotierenden Bauteil, nämlich im Bereich des Bajonettverschlusses sichergestellt.

Vorteilhafterweise besteht das Trägerelement aus Kunststoff, wobei der statische und/oder dynamische Dichtbereich, insbesondere durch Anspritzen, daran angeformt ist bzw. sind.

Der Erfindungsgegenstand ist anhand eines Ausführungsbeispieles in der Zeichnung dargestellt und wird wie folgt beschrieben. Es zeigen:
- Figur 1: Ausschnitt aus einem Motorgehäusedeckel;
- Figur 2: Verschiedene Ansichten bzw. Schnitte des erfindungsgemäßen Dichtsystems;
- Figur 3: Vergrößerte Darstellung eines Teilbereiches des Dichtsystemes;
- Figur 4: Perspektivische Darstellung des Trägerelementes.
- Figur 5: Vergrößerte Ansicht der Durchgangsbohrung gemäß Fig. 1

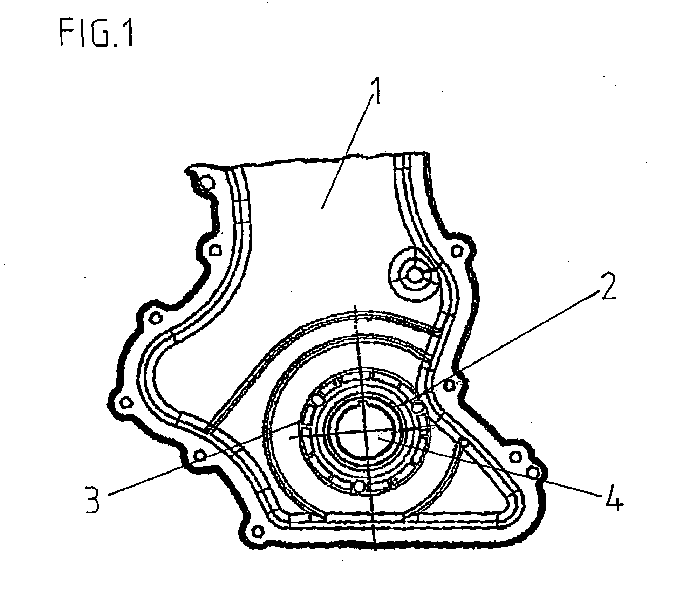

Figur 1 zeigt als Prinzipskizze einen Motorgehäusedeckel 1, der zur Aufnahme eines Dichtsystemes 2 vorgesehen ist. Der Motorgehäusedeckel 1 verfügt über geradlinig verlaufende, nicht profilierte Abschnitte 3, die mit dem Dichtsystem 2 in Wirkverbindung bringbar sind. In eine Durchgangsbohrung 4 wird das Dichtsystem 2 in zentrierender Form eingebracht.

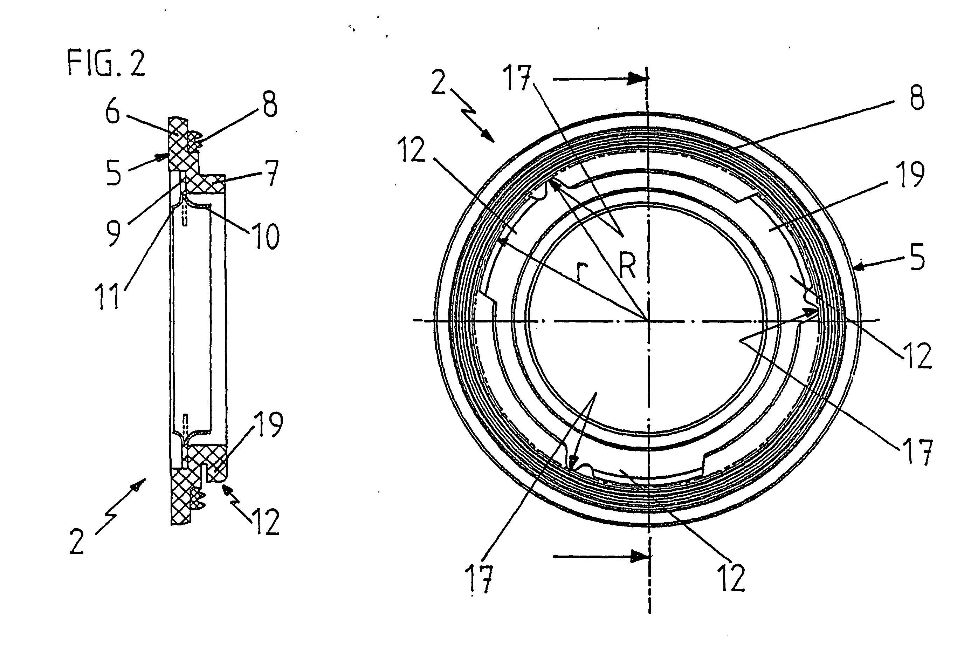

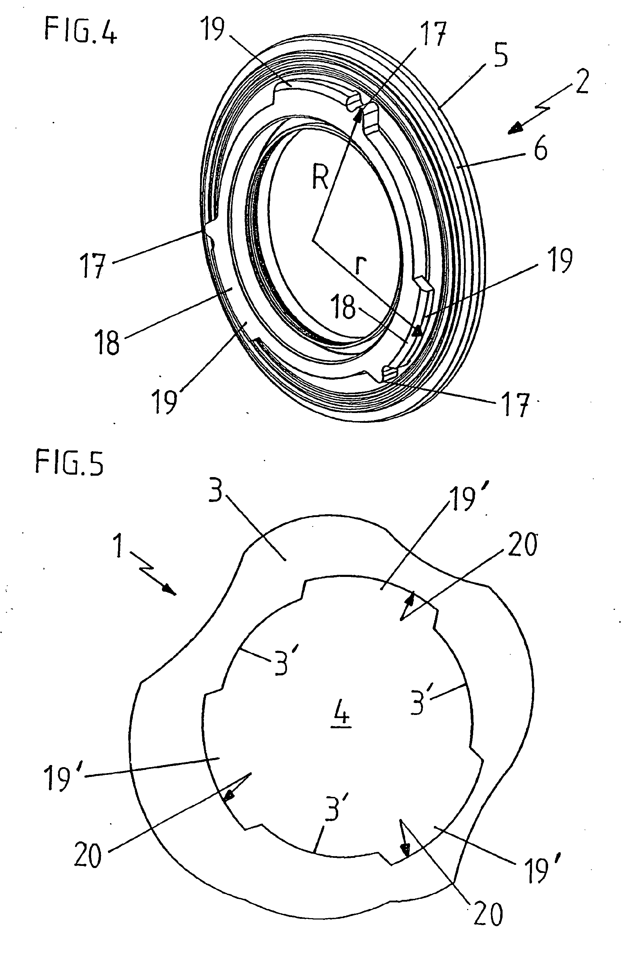

Figur 2 zeigt in verschiedenen Ansichten bzw. Schnitten das erfindungsgemäße Dichtsystem 2. Erkennbar ist ein Trägerelement 5, das in diesem Beispiel aus Kunststoff bestehen soll. Das Trägerelement 5 weist einen etwa L-förmigen Querschnitt auf und beinhaltet einen Radialschenkel 6 sowie einen Axialschenkel 7. Im äußeren Umfangsbereich des Radialschenkels 6 ist ein statisch wirkender Dichtbereich 8 angeformt. Ein dynamischer Dichtbereich 9, beinhaltend eine Hauptlippe 10 und eine Nebenlippe 11, welche am Axialschenkel 7 angeformt sind. Über einen hier nur angedeuteten später detaillierter beschriebenen Zentrierbereich 12 wird das Dichtsystem 2 in der Durchgangsbohrung 4 des Motorgehäusedeckels 1 positioniert. Hier lediglich angedeutet ist ein Bajonettverschluß 19, der insbesondere in Figur 4 näher beschrieben wird.

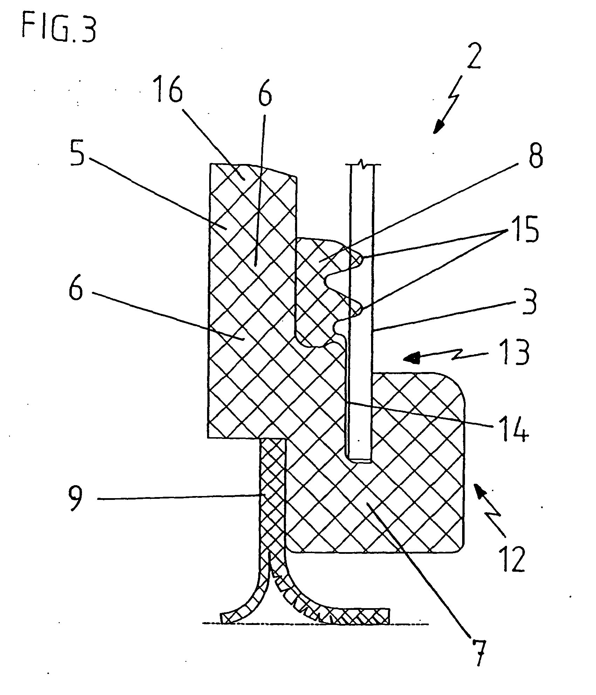

Figur 3 zeigt in vergrößerter Form einen Teilausschnitt des Dichtsystems 2 gemäß Figur 2. Erkennbar ist das Trägerelement 5, der statische Dichtbereich 8 sowie der dynamische Dichtbereich 9. Ferner erkennbar sind der Radialschenkel 6 und der Axialschenkel 7. Im Übergangsbereich 13 vom Radialschenkel 6 in den Axialschenkel 7 erstrecken sich in Umfangsrichtung verlaufende Einschnitte 14, in welche zumindest Teilbereiche des geradlinig Abschnittes 3 (lediglich angedeutet) des Motorgehäusedeckels 1 eingreifen. Lippen 15 des statischen Dichtbereiches 8 liegen dann in entsprechender Weise an diesem geradlinig verlaufenden Bereich des Abschnittes 3 mit vorgebbarer Kraft in dichtender Weise an, während der äußere Bereich 16 des Radialschenkels 6 keinen Kontakt mit dem Motorgehäusedecke 1 besitzt. Der Zentrierbereich 12 ist in dieser Figur lediglich angedeutet.
Figur 4 zeigt das erfindungsgemäße Dichtsystem 2 in perspektivischer Ansicht. Erkennbar ist das Trägerelement 5, beinhaltend den Radialschenkel 6 und den Axialschenkel 7. Der bereits in Figur 2 angedeutete Bajonettverschluß 19 erstreckt sich an definierten Umfangsstellen 18. In Umfangsrichtung gesehen erstrecken sich benachbart zu jedem Bajonettverschluß 19 die erfindungsgemäßen Ansätze 17. Der äußere Bereich der Ansätze 17 erstreckt sich auf einem Radius R der größer als der Radius r auf dem sich der äußere Bereich des Bajonettverschlusses 19 erstreckt. Beim Einbau des Dichtsystems 2 in die Durchgangsbohrung 4 des Motorgehäusedeckels 1 (Figur 5) übernehmen die Ansätze 17 die Zentrierung während der Bajonettverschluss 19 eine Arretierung zwischen Dichtsystem 2 und Motorgehäusedeckel 1 herbeigeführt. Die Figur 5 zeigt die Durchgangsbohrung 4 des Motorgehäusedeckels 1 in einer vergrößerten Darstellung. In dem geradlinig verlaufenden Bereich 3 des Motorgehäusedeckels ist die Durchgangsbohrung 4 so ausgebildet, dass zum Bajonettverschluß 19 korrespondierende Ausnehmunge 19' gebildet sind. In diese Ausnehmungen 19' wird der Bajonettverschluß 19 eingetaucht, dabei ist der Aussendurchmesser bzw. der Radius R auf dem sich die Ansätze 17 erstrecken so gewählt, dass die Ansätze 17 in Kontakt mit der Aussenumfangsfläche 20 der Ausnehmungen 19' gelangen, um so eine Zentrierung zu erzeugen während der Aussendurchmesser bzw. der Radius r auf dem sich die Bajonettverschlüsse erstrecken geringfügig kleiner ausgebildet ist. Durch Drehung des Dichtsystems 2 innerhalb der Durchgangsbohrung 4 gelangen die Bajonettverschlüsse 19 in den Bereich 3' des Motorgehäusedeckels 1 und führen so eine Arretierung herbei. Während der Drehung stützen sich die Ansätze 17 permanent an den Aussenumfangsflächen 20 ab.

## Patentansprüche

1. Dichtsystem für eine Welle, insbesondere für eine Brennkraftmaschine, mit einem Motorgehäusedeckel (1), welcher eine Durchgangsbohrung (4) zur Aufnahme eines Trägerelements (5) beinhaltet, wobei das Trägerelement (5) mindestens einen dynamisch (9) sowie mindestens einen statisch wirkenden Dichtbereich (8) aufweist und mit einem Zentrierbereich (12) versehen ist, über den eine Zentrierung zur Durchgangsbohrung (4) erzeugbar ist, wobei das Trägerelement (5) mit dem Motorgehäusedeckel (1) über einen Bajonettverschluß (19) in gesicherter Form verbindbar ist, wobei der Zentrierbereich (12) in der Ebene des Bajonettverschlußes (19) angeordnet ist, dergestalt, dass der dynamische Dichtbereich (9) in ausgerichteter Weise mit einer Welle und der statische Dichtbereich (8) mit vorgebbarer Anpreßkraft an einem korrespondierenden Abschnitt (3) des Motorgehäusedeckels (1) zur Anlage bringbar ist, **dadurch gekennzeichnet, dass** der Zentrierbereich (12) durch radial sich erstreckende Ansätze (17) ausgebildet ist.

2. Dichtsystem nach Anspruch 1, **dadurch gekennzeichnet, dass** der statische Dichtbereich (8) an einen geradlinig verlaufenden Abschnitt (3) des Motorgehäusedeckels (1) zur Anlage bringbar ist.

3. Dichtsystem nach einem der Ansprüche 1 bis 2, **dadurch gekennzeichnet, dass** das Trägerelement (5) mit einem im wesentlichen L-förmigen Querschnitt versehen ist, so dass ein Radialschenkel (6) und ein Axialschenkel (7) gebildet ist, und dass die Ansätze (17) im Bereich des Axialschenkels (7) angeordnet sind, wobei am Umfang verteilt, mehrere Ansätze (17) vorgesehen sind.

4. Dichtsystem nach einem der Ansprüche 1 bis 3, **dadurch gekennzeichnet, dass**, in Umfangsrichtung gesehen, die Ansätzen (17) neben dem Bajonettverschluß (19) angeformt sind.

5. Dichtsystem nach einem der Ansprüche 1 bis 4, **dadurch gekennzeichnet, dass** der äußere Bereich der Ansätze (17) sich auf einem Radius R erstreckt der größer ist als der Radius r auf dem sich der äußere Bereich des Bajonettverschlusses (19) erstreckt.

6. Dichtsystem nach einem der Ansprüche 1 bis 5, **dadurch gekennzeichnet, dass** das Trägerelement (5) aus Kunststoff besteht, an welches der statische (8) und/oder der dynamische Dichtbereich (9), insbesondere durch Anspritzen, angeformt ist.

7. Dichtsystem nach einem der Ansprüche 1 bis 6, **dadurch gekennzeichnet, dass** der Radialschenkel (6) des Trägerelementes (5) den statisch wirkenden Dichtbereich (8) aufnimmt.

8. Dichtsystem nach einem der Ansprüche 1 bis 7, **dadurch gekennzeichnet, dass** der Axialschenkel (7) des Trägerelementes (5) mit dem dynamisch wirkenden Dichtbereich (9) zusammenwirkt.

## Claims

1. Sealing system for a shaft, in particular for an internal combustion engine, comprising an engine casing cover (1) having a through bore (4) for accommodating a support element (5), wherein the support element (5) comprises at least one dynamic (9) and at least one statically acting sealing region (8) and is provided with a centring region (12) by means of which centring relative to the through bore (4) can be achieved, wherein the support element (5) can be connected in a secured form to the engine casing cover (1) by means of a bayonet closure (19), wherein the centring region (12) is disposed in the plane of the bayonet closure (19), such that the dynamic sealing region (9) can be brought to bear in aligned manner against a shaft and the static sealing region (8) can be brought to bear with a predeterminable pressing force against a corresponding section (3) of the engine casing cover (1), **characterised in that** the centring region (12) is formed by radially extending projections (17).

2. Sealing system according to claim 1, **characterised in that** the static sealing region (8) can be brought into contact with a linearly extending section (3) of the engine casing cover (1).

3. Sealing system according to one of the claims 1 to 2, **characterised in that** the support element (5) is provided with a substantially L-shaped cross-section, so that a radial limb (6) and an axial limb (7) are formed and that the projections (17) are disposed in the region of the axial limb (7), wherein a plurality of projections (17) are provided distributed round the periphery.

4. Sealing system according to one of the claims 1 to 3, **characterised in that**, seen in the peripheral direction, the projections (17) are formed adjacent to the bayonet closure (19).

5. Sealing system according to one of the claims 1 to 4, **characterised in that** the outer region of the projections (17) extends on a radius R which is larger than the radius r on which the outer region of the bayonet closure (19) extends.

6. Sealing system according to one of the claims 1 to 5, **characterised in that** the support element (5) is made from plastics on which the static (8) and/or the dynamic sealing region (9) is formed, in particular by injection moulding.

7. Sealing system according to one of the claims 1 to 6, **characterised in that** the radial limb (6) of the support element (5) accommodates the statically acting sealing region (8).

8. Sealing system according to one of the claims 1 to 7, **characterised in that** the axial limb (7) of the support element (5) cooperates with the dynamically acting sealing region (9).

## Revendications

1. Système d'étanchéité pour un arbre, notamment pour un moteur à combustion interne, comprenant un couvercle de carter moteur (1) qui contient un perçage traversant (4) pour recevoir un élément porteur (5), l'élément porteur (5) présentant au moins une zone étanche (8) agissant de manière dynamique (9) ainsi qu'au moins une zone étanche (8) agissant de manière statique et étant pourvu d'une zone de centrage (12), par le biais de laquelle un centrage par rapport au perçage traversant (4) peut être réalisé, l'élément porteur (5) pouvant être relié au couvercle de carter moteur (1) par le biais d'un verrouillage à baïonnette (19) sous la forme fixée, la zone de centrage (12) étant disposée dans le plan du verrouillage à baïonnette (19) de telle sorte que la zone étanche (9) dynamique puisse être amenée en appui de manière orientée à l'aide d'un arbre et la zone étanche (8) statique à l'aide de la force d'application prescriptible sur une section (3) correspondante du couvercle de carter moteur (1), **caractérisé en ce que** la zone de centrage (12) est réalisée par des épaulements (17) s'étendant radialement.

2. Système d'étanchéité selon la revendication 1, **caractérisé en ce que** la zone étanche (8) statique peut être amenée en appui sur une section (3) s'étendant de manière rectiligne du couvercle de carter moteur (1).

3. Système d'étanchéité selon l'une quelconque des revendications 1 à 2, **caractérisé en ce que** l'élément porteur (5) est pourvu d'une section essentiellement en forme de L de sorte qu'une branche radiale (6) et une branche axiale (7) soient formées, et **en ce que** les épaulements (17) sont disposés dans la zone de la branche axiale (7), plusieurs épaulements (17) étant prévus répartis sur la périphérie.

4. Système d'étanchéité selon l'une quelconque des revendications 1 à 3, **caractérisé en ce que**, vus dans le sens périphérique, les épaulements (17) sont formés à côté du verrouillage à baïonnette (19).

5. Système d'étanchéité selon l'une quelconque des revendications 1 à 4, **caractérisé en ce que** la zone extérieure des épaulements (17) s'étend sur un rayon R qui est supérieur au rayon r, sur lequel s'étend la zone extérieure du verrouillage à baïonnette (19).

6. Système d'étanchéité selon l'une quelconque des revendications 1 à 5, **caractérisé en ce que** l'élément porteur (5), sur lequel est formée la zone étanche (8) statique et/ou la zone étanche (9) dynamique, notamment par moulage par injection, se compose de matière plastique.

7. Système d'étanchéité selon l'une quelconque des revendications 1 à 6, **caractérisé en ce que** la branche radiale (6) de l'élément porteur (5) reçoit la zone étanche (8) agissant de manière statique.

8. Système d'étanchéité selon l'une quelconque des revendications 1 à 7, **caractérisé en ce que** la branche axiale (7) de l'élément porteur (5) coopère avec la zone étanche (9) agissant de manière dynamique.
